Europäisches Patentamt

European Patent Office

Office européen des brevets

(19)

(11) **EP 0 668 682 B1**

(12) **FASCICULE DE BREVET EUROPEEN**

(45) Date de publication et mention
de la délivrance du brevet:
**31.01.2001 Bulletin 2001/05**

(51) Int Cl.[7]: **H04L 27/18**

(21) Numéro de dépôt: **95400320.8**

(22) Date de dépôt: **15.02.1995**

(54) **Système de codage convolutionnel et de décodage de Viterbi transparent aux sauts de phase de pi et pi/2 en transmission MDP-4**

System zur Faltungskodierung und Viterbidekodierung in PSK-4 Übertragung

System of convolutional coding and Viterbi decoding, transparent to phase shifts of pi and pi/2 in PSK-4 transmission

(84) Etats contractants désignés:
**DE ES FR GB IT NL SE**

(30) Priorité: **18.02.1994 FR 9401876**

(43) Date de publication de la demande:
**23.08.1995 Bulletin 1995/34**

(73) Titulaire: **ALCATEL**
**75008 Paris (FR)**

(72) Inventeurs:
• **Lemaitre, Didier**
**F-95280 Jouy le Moutier (FR)**
• **Bonin, Jean-Pierre**
**F-92200 Neuilly sur Seine (FR)**

(74) Mandataire: **Scheer, Luc et al**
**COMPAGNIE FINANCIERE ALCATEL**
**Dépt. Propr. Industrielle,**
**30, avenue Kléber**
**75116 Paris (FR)**

(56) Documents cités:
**EP-A- 0 486 729         WO-A-92/20162**
**US-A- 5 023 889**

• **40th IEEE Vehicular Technology Conference, 6-9/5/1990, Orlando, US; IEEE, New York, US, 1990; pages 471 - 475, Elnoubi et al.: "Performance of trellis coded QPSK in mobile radio channels"**
• **Eleventh Annual International Phoenix Conference on Computers and Communications, 1-3/4/1992, Scottsdale, US; pages 232 - 239, Ross et al.: "Pragmatic trellis coded modulation: a simulation using 24-sector quantized 8-PSK"**

## Description

Le domaine de l'invention est celui de la transmission de données numériques, notamment par voie hertzienne, et concerne plus précisément un système de codage et de décodage de données qui est transparent aux sauts de cycle de porteuse de $\pi$ et $\pi/2$ (voir aussi document WO-A-92/20162). Le système de l'invention peut notamment être utilisé pour la transmission de signaux par satellite entre un émetteur et un récepteur, par exemple pour une transmission en mode AMRT (Accès Multiple à Répartition dans le Temps).

Dans la suite de cette description, on considère une transmission de type MDP-4 (Modulation à Déplacement de Phase à 4 états de phase), c'est à dire que chaque couple de bits à transmettre est représenté par un échantillon dont la position dans un plan de phase complexe (constellation) est fonction de la valeur de ce couple.

Les systèmes de transmission numériques actuels emploient de plus en plus fréquemment des décodeurs correcteurs d'erreurs afin de pouvoir travailler à des rapports signal à bruit du signal reçu plus faibles. A titre d'exemple, un codage convolutif de taux 3/4 associé à un décodeur de Viterbi permet d'obtenir un gain de signal à bruit d'environ 4,3 dB pour un taux d'erreur binaire de $10^{-6}$.

Les émetteurs/récepteurs fonctionnant en mode AMRT utilisent également la correction d'erreur, avec toutefois des contraintes supplémentaires puisqu'il faut réaliser un compromis au niveau de la synchronisation de la récupération de porteuse. En effet, en AMRT, il est nécessaire d'effectuer une récupération de porteuse dans un temps suffisamment court pour que chaque paquet de données reçu soit correctement démodulé et les dispositifs de récupération de porteuse classiques, de type à base de boucle de contre-réaction (boucle de Costas, PLL,...), ne conviennent pas car ils sont trop lents. On utilise donc des dispositifs de type à boucle ouverte ("feedforward" en anglais) qui présentent des temps d'acquisition bien plus courts.

Ces derniers dispositifs emploient cependant nécessairement un filtre de récupération de porteuse dont la largeur de bande résulte d'un compromis entre :

- un temps d'acquisition de synchronisation faible, ce qui nécessite une large bande passante. Un temps d'acquisition de synchronisation faible est primordial en transmission AMRT car une variation de la fréquence porteuse pourra alors être rapidement prise en compte et le signal de démodulation sera rapidement calé en phase et en fréquence sur la porteuse du signal reçu. Les informations utiles de chaque paquet reçu seront alors correctement décodées ;

- une minimisation de la probabilité de saut de cycle, ce qui nécessite une bande passante étroite. Lorsque le canal de transmission est bruité, ce qui justifie par ailleurs l'utilisation du décodage correcteur d'erreurs, le signal de démodulation peut être affecté de sauts de phase ou encore de sauts de cycles de $\pi$ et de $\pi/2$. Il s'en suit que la constellation du signal reçu est affectée d'une rotation et les symboles décodés ne correspondent plus aux symboles émis.

On pourra se reporter notamment à la demande de brevet français n°93.07905 déposée le 29 juin 1993 qui décrit plus précisément ce problème connu.

La diminution du rapport signal à bruit due à l'utilisation de décodeurs correcteurs d'erreurs a obligé les fabricants de matériel de télécommunications à réduire la bande passante du filtre de récupération de porteuse réception et par conséquent à rallonger la longueur du préambule de chaque paquet transmis en AMRT pour assurer qu'à la fin du préambule l'erreur de phase du signal de démodulation soit nulle. On appelle préambule un certain nombre de bits de synchronisation présents au début d'un paquet permettant au récepteur de se synchroniser en fréquence et en phase sur le signal reçu. La solution consistant à rallonger ce préambule n'est cependant pas acceptable car le rendement des paquets (nombre de bits de synchronisation / nombre total de bits dans un paquet) est alors diminué.

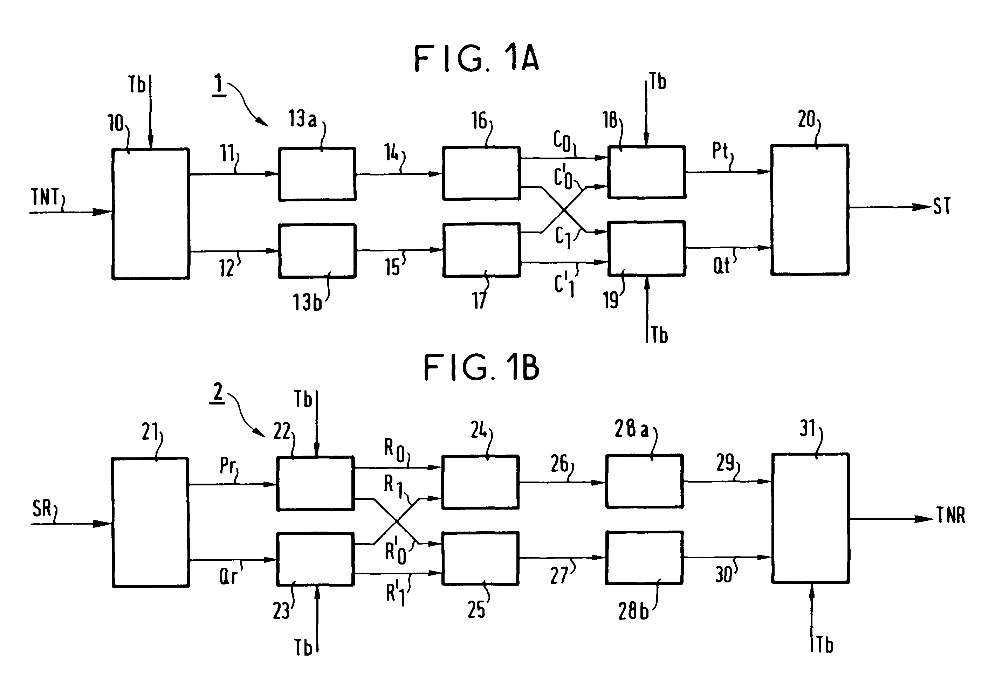

La norme INTELSAT IESS-308 définit un système de codage/décodage de données numériques transmises entre un émetteur et un récepteur. Un tel système est représenté aux figures 1A et 1B qui représentent respectivement un émetteur et un récepteur de données numériques.

En regard de la figure 1A, un émetteur 1 reçoit à un rythme bit Tb un train numérique à transmettre TNT. Le train numérique TNT est appliqué à l'entrée d'un démultiplexeur 10 fonctionnant au rythme Tb. Le démultiplexeur 10 fournit deux trains démultiplexés 11, 12 (respectivement des bits pairs et impairs) à des moyens de codage différentiel constitués par des codeurs différentiels 13a et 13b de type MDP-2. Ces codeurs différentiels fournissent chacun un train codé 14, 15 à des codeurs convolutifs 16, 17 identiques. Chaque codeur convolutif 16, 17 fournit deux bits pour chaque bit appliqué à son entrée (rendement 1/2). La longueur de contrainte est par exemple égale à 7 et on peut utiliser un codeur ayant comme polynôme générateur G = (133, 171) en octal.

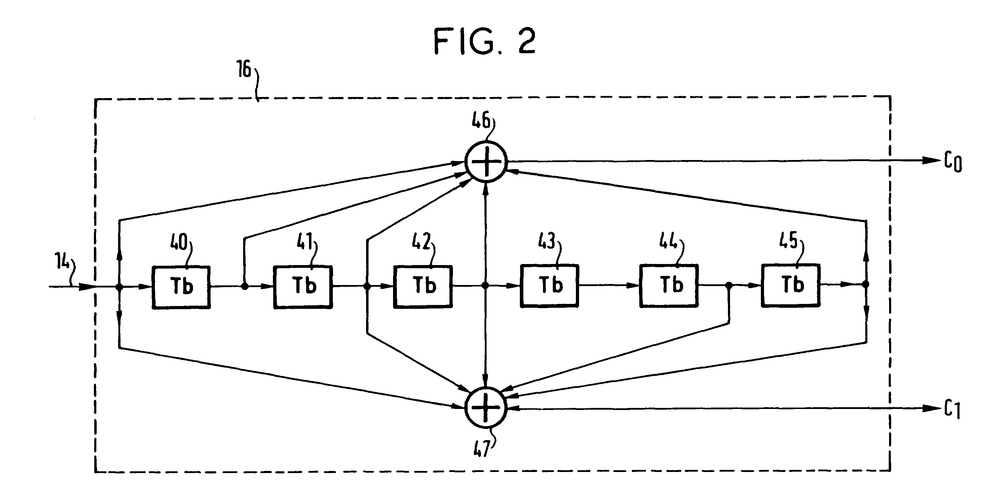

Un codeur convolutif de ce type, par exemple le codeur 16, est représenté à la figure 2.

Le codeur convolutif 16 reçoit à chaque temps bit un bit sur son entrée 14 et fournit, également à chaque temps bit, deux bits de sortie Co et C1. Il comporte six bascules 40 à 45 retardant chacune le signal d'un temps bit Tb. Deux additionneurs modulo 2, référencés 46 et 47, fournissent Co et C1 qui correspondent aux codages 171 et 133 en octal respectivement. Chaque couple de deux bits (Co, C1) et (C'o, C'1) issu d'un codeur convolutif constitue un mot de code.

En se référant à nouveau à la figure 1A, les bits Co et C'o sont appliqués à l'entrée d'un multiplexeur 18 et les bits C1 et C'1 à l'entrée d'un multiplexeur 19. On a donc un entrelacement des voies de traitement. Les deux multiplexeurs fonctionnent au rythme bit Tb pour alternativement fournir sur leurs sorties les bits appliqués sur leurs entrées. Ainsi, à chaque temps bit, chaque multiplexeur fournit une des composantes Pt, Qt d'un symbole à transmettre. Ces composantes correspondent respectivement aux composantes en phase et en quadrature d'un signal à 4 états de phase (signal de type MDP-4). Les composantes Pt et Qt sont appliquées à des moyens 20 de modulation MDP-4 et de transmission fournissant un symbole transmis ST.

La transmission considérée dans l'invention est de type hertzienne et le récepteur 2 de la figure 1B reçoit les signaux transmis par l'émetteur 1.

Le récepteur 2 comporte des moyens 21 de réception et de démodulation du symbole transmis et reçu, noté SR, fournissant deux composantes Pr, Qr de symbole reçu. Les moyens de démodulation comportent notamment un dispositif de récupération de porteuse. Chaque composante est appliquée à un démultiplexeur 22, 23 fonctionnant au rythme bit Tb et fournissant chacun, tous les deux temps bit, un mot de code reçu de deux bits. Ces mots de code sont (Ro, R'o) et (R1, R'1) et sont appliqués à des décodeurs de Viterbi 24, 25, fournissant chacun un mot décodé 26, 27 de sortie. Les bits Ro et R1 sont appliqués au décodeur de Viterbi 24 et les bits R'o et R'1 au décodeur de Viterbi 25. Les mots décodés 26, 27 sont appliqués à des moyens de décodage différentiel constitués par des décodeurs différentiels 28a et 28b qui fournissent deux trains décodés 29, 30. Les décodeurs différentiels 28a et 28b assurent une levée d'ambiguïté des sauts de cycle de π du dispositif de récupération de porteuse, c'est à dire qu'un déphasage de π entre la porteuse reçue et le signal d'oscillateur local n'a pas d'influence sur les bits transmis. Un multiplexeur 31 fonctionnant au rythme bit Tb fournit un train numérique reçu TNR à partir des trains décodés 29 et 30.

Dans un système de transmission de ce type, deux voies de traitement parallèles sont donc utilisées. Ceci permet de doubler le débit de transmission puisque deux codeurs et deux décodeurs fonctionnent en parallèle en MDP-2.

Le gain de rapport signal à bruit apporté par un codage correcteur d'erreurs peut cependant être annihilé par les sauts de cycles indésirables. En effet, un saut de cycle porteuse entraîne une inversion entre les bits présentés aux entrées d'un décodeur et on observe alors une divergence des métriques. Le décodeur de Viterbi nécessitera alors un temps important pour se rendre compte de cette divergence et la convergence des métriques nécessite plusieurs milliers de symboles. En conséquences, si un saut de cycle se produit au cours de la réception d'un paquet ou même au début d'un paquet reçu, par exemple pendant la réception d'un préambule, le reste du paquet sera perdu.

Ce phénomène d'inversion des bits est mis en évidence dans les tableaux 1 et 2 ci-dessous. Le tableau 1 représente les composantes reçues en fonction des sauts de phase et le tableau 2 les bits reçus en fonction de ces mêmes sauts de phase.

## TABLEAU 1

| COMPOSANTES | SAUTS DE PHASE | | | |
|---|---|---|---|---|
| | 0 | $+\pi/2$ | $\pi$ | $-\pi/2$ |
| Pr | Pt | Qt | $\overline{Pt}$ | $\overline{Qt}$ |
| Qr | Qt | $\overline{Pt}$ | $\overline{Qt}$ | Pt |

### TABLEAU 2

| BITS | SAUTS DE PHASE | | | |
|---|---|---|---|---|
| | 0 | $+\pi/2$ | $\pi$ | $-\pi/2$ |
| Ro | Co | C1 | $\overline{Co}$ | $\overline{C1}$ |
| R1 | C1 | C'1 | $\overline{C1}$ | $\overline{C'1}$ |
| R'o | C'o | $\overline{Co}$ | $\overline{C'o}$ | Co |
| R'1 | C'1 | $\overline{C'o}$ | $\overline{C'1}$ | C'o |

Pour un saut de phase de 0 ou de $\pi$, les composantes reçues Pr et Qr correspondent soit aux composantes émises, soit à l'inverse de ces composantes. Dans ces deux cas, les décodeurs de Viterbi assurent un décodage correct puisqu'ils sont transparents à un saut de phase de $\pi$. Le décodage différentiel permet de lever l'ambiguïté de $\pi$. En revanche, pour des sauts de phase de $\pm\pi/2$, les décodeurs de Viterbi ne peuvent pas retrouver les composantes émises et les métriques divergent. En effet, comme montré dans le tableau 2, les bits appliqués aux entrées d'un même décodeur de Viterbi ont subi un codage différent (171 ou 133). Par exemple, pour un saut de phase de $\pi/2$, l'entrée Ro du décodeur, qui s'attend à recevoir un bit codé selon le code 171, reçoit le bit C1 qui a été codé selon le code 133. Il s'en suit que les décodeurs de Viterbi ne peuvent retrouver les bits émis. Dans une transmission continue, ceci se traduit par une perte de synchronisation, alors qu'en transmission AMRT, le paquet entier reçu est perdu. On notera que cet inconvénient résulte du fait que les codages 171 et 133 sont transparents aux sauts de phase de $\pi$ et non aux sauts de $\pm\pi/2$.

La présente invention a notamment pour objectif de remédier à ces inconvénients.

Plus précisément, un des objectifs de l'invention est de fournir un système de codage/décodage de données qui soit transparent non seulement aux sauts de phase de $\pi$ mais également aux sauts de phase de $\pi/2$.

Cet objectif, ainsi que d'autres qui apparaîtront par la suite, est atteint grâce à un système de codage/décodage de données numériques transmises entre un émetteur et un récepteur, l'émetteur comprenant :

- un démultiplexeur recevant un train numérique à transmettre et fournissant deux trains démultiplexés au rythme bit ;
- un codeur différentiel de type MDP-4 recevant les trains démultiplexés et fournissant deux trains codés ;
- deux codeurs convolutifs recevant chacun un des trains codés et fournissant chacun un mot de code pour chaque bit de train codé reçu ;
- deux multiplexeurs des mots de code fonctionnant au rythme bit et fournissant chacun une des composantes d'un symbole à transmettre ;
- des moyens de modulation et de transmission du symbole fournissant un symbole transmis,

le récepteur comprenant :

- des moyens de réception et de démodulation du symbole transmis fournissant deux composantes de symbole reçu ;
- deux démultiplexeurs recevant chacun une des composantes du symbole reçu et fournissant chacun un mot de code reçu au rythme bit ;
- deux décodeurs de Viterbi fournissant chacun un mot décodé à partir des mots de code reçus ;
- un décodeur différentiel de type MDP-4 recevant les mots décodés et fournissant deux trains décodés ;
- un multiplexeur des trains décodés fournissant un train numérique reçu,

chaque mot de code issu d'un des codeurs convolutifs étant appliqué à un multiplexeur unique et chaque bit d'un mot de code reçu étant appliqué à un décodeur de Viterbi unique. Les données numériques transmises entre l'émetteur et le récepteur présentent une structure de trame comportant un mot de verrouillage trame. Un tel mot de verrouillage est également appelé mot unique ou mot de reconnaissance et permet au récepteur de se synchroniser sur le signal reçu pour faire correspondre Ro à Co, R1 à C1, R'o à C'o et R'1 à C'1 respectivement.

En supprimant l'entrelacement des voies de traitement au niveau émetteur et récepteur, les mots de code appliqués aux entrées des décodeurs de Viterbi correspondent ainsi effectivement à des mots codés et ces décodeurs ne divergent pas. Les codeurs convolutifs peuvent ainsi fournir des mots de code non transparents aux sauts de phase de $\pi/2$ et donc avoir comme polynôme générateur G = (171, 133).

D'autres caractéristiques et avantages de l'invention apparaîtront à la lecture de la description suivante d'un mode de réalisation préférentiel, donné à titre illustratif et non limitatif, et des dessins annexés, dans lesquels :

- les figures 1A et 1B représentent respectivement un émetteur et un récepteur de données numériques répondant à la norme INTELSAT IESS-308 ;
- la figure 2 représente un codeur convolutif ayant comme polynôme générateur G = (171, 133) ;
- les figures 3A et 3B représentent respectivement un émetteur et un récepteur de données numériques selon l'invention.

Les figures 1A, 1B et 2 ont été décrites précédemment en référence à l'état de la technique.

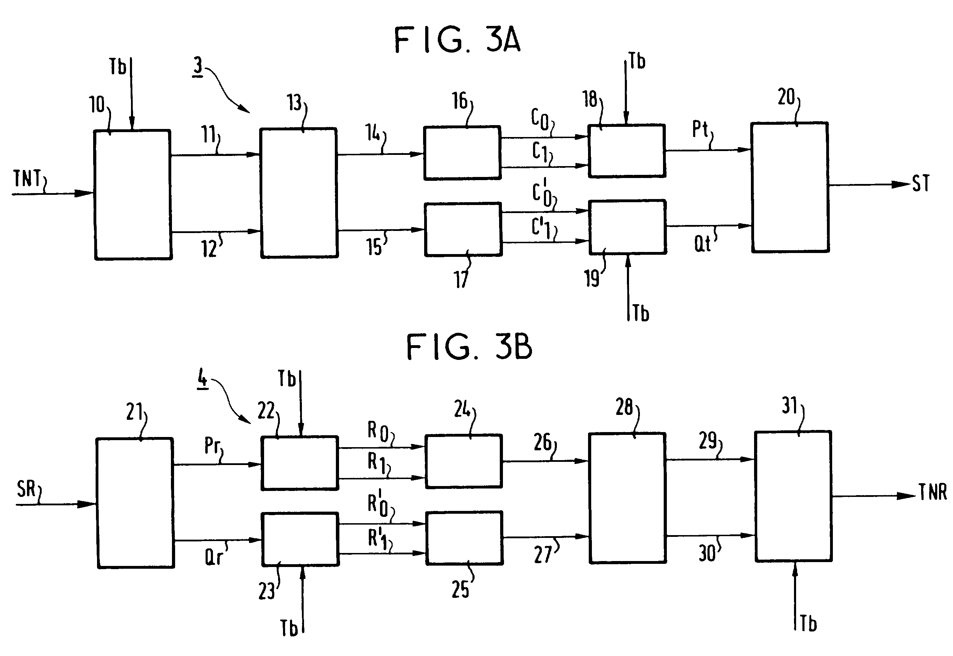

Les figures 3A et 3B représentent respectivement un émetteur et un récepteur de données numériques selon l'invention. Les éléments identiques à ceux des figures 1A et 1B portent les mêmes références.

L'invention se distingue notamment de l'état de la technique en ce que les voies de traitement ne sont plus entrelacées. Ainsi, dans l'émetteur 3 de la figure 3A, chaque mot de code (Co, C1) et (C'o, C'1) issu d'un des codeurs convolutifs 16, 17 est appliqué à un multiplexeur unique 18, 19. De même, dans le récepteur 4 de la figure 3B, chaque bit d'un mot de code reçu (Ro, R1) et (R'o, R'1) est appliqué à un décodeur de Viterbi unique 22, 23.

De plus, les codeurs différentiels 13a et 13b de la figure 1A sont remplacés par un codeur différentiel 13 unique fonctionnant en MDP-4. De même, au niveau du récepteur, les décodeurs différentiels 28a et 28b sont remplacés par un décodeur différentiel unique 28 de type MDP-4.

L'objectif principal de l'invention qui est de rendre transparent le système de transmission aux sauts de phase de $\pi$ et de $\pi/2$ est atteint, comme montré dans le tableau 3 ci-dessous :

## TABLEAU 3

| BITS | SAUTS DE PHASE | | | |
|---|---|---|---|---|
| | 0 | $+\pi/2$ | $\pi$ | $-\pi/2$ |
| Ro | Co | C'o | $\overline{Co}$ | $\overline{C'o}$ |
| R1 | C1 | C'1 | $\overline{C1}$ | $\overline{C'1}$ |
| R'o | C'o | $\overline{Co}$ | $\overline{C'o}$ | Co |
| R'1 | C'1 | $\overline{C1}$ | $\overline{C'1}$ | C1 |

Les sauts de phase sont conformes au tableau 1 précédemment décrit. Plus précisément, pour un saut de phase de 0 ou de $\pi$, les composantes reçues Pr et Qr correspondent soit aux composantes émises, soit à l'inverse de ces composantes, de même que dans l'état de la technique. La levée d'ambiguïté de phase de $\pi$ est assurée par le décodage différentiel de type MDP-4.

En revanche, pour des sauts de phase de $\pm\pi/2$, les décodeurs de Viterbi 24 et 25 reçoivent des mots de code qu'ils reconnaissent puisque leur sont appliqués les mots de code (C'o, C'1) ou ($\overline{Co}$, $\overline{C1}$) lorsqu'un saut de phase de $+\pi/2$ se produit et ($\overline{C'o}$, $\overline{C'1}$) ou (Co, C1) lorsqu'un saut de phase de $-\pi/2$ se produit. Ainsi, quel que soit le déphasage entre le signal modulé et le signal d'oscillateur local, un décodage correct est assuré et les décodeurs de Viterbi ne divergent pas.

On peut noter que les démultiplexeurs 22 et 23 peuvent être ceux généralement compris dans les décodeurs de Viterbi et on utilise dans ce cas les entrées série de ces décodeurs.

L'invention peut s'appliquer aux transmissions continues où les signaux transmis présentent une structure de trame comportant un mot de verrouillage de trame (mot unique ou mot de reconnaissance permettant une synchronisation) mais trouve une application particulièrement intéressante dans les transmissions AMRT puisqu'un saut de phase ne génère qu'un court paquet d'erreurs.

Dans une transmission AMRT, on utilise le mot unique présent dans le préambule de chaque paquet transmis pour synchroniser les démultiplexeurs 22 et 23 (ou alors les décodeurs de Viterbi 24 et 25 lorsque les entrées série de ces décodeurs sont utilisées) en début de l'information utile, c'est à dire pour que (Co, C1) et (C'o, C'1) correspondent respectivement à (Ro, R1) et (R'o, R'1). Cette synchronisation peut être obtenue par des moyens existants dans l'état de la technique, comme par exemple un détecteur de mot unique tel que décrit dans la demande de brevet précitée.

Des simulations ont montré qu'en l'absence de bruit le nombre d'erreurs lors d'un saut de cycle porteuse ne dépasse pas 50 pour un code poinçonné 3/4. Un poinçonneur est à cet effet inséré entre le codeur différentiel 13 et les multiplexeurs 16 et 17, alors qu'un dépoinçonneur est inséré entre les démultiplexeurs 22 et 23 et les décodeurs de Viterbi 24, 25. En présence de bruit (Eb/No = 4 dB), le nombre maximum d'erreurs par paquet est voisin de 60, avec une moyenne de 25 erreurs par paquet. Pour un code non poinçonné de rendement 1/2 et en l'absence de bruit, le nombre d'erreurs par paquet est inférieur à 22 avec une moyenne de 7,5 erreurs par paquet.

## Revendications

1. Système de codage/décodage de données numériques transmises entre un émetteur (3) et un récepteur (4), ledit émetteur (3) comprenant :

   - un démultiplexeur (10) recevant un train numérique à transmettre (TNT) et fournissant deux trains démultiplexés (11, 12) au rythme bit (Tb) ;
   - des moyens de codage différentiel (13) recevant lesdits trains démultiplexés (11, 12) et fournissant deux trains codés (14, 15) ;
   - deux codeurs convolutifs (16, 17) recevant chacun un desdits trains codés (14, 15) et fournissant chacun un mot de code (Co, C1 ; C'o, C'1) pour chaque bit de train codé (14, 15) reçu ;
   - deux multiplexeurs (18, 19) desdits mots de code (Co, C1 ; C'o, C'1) fonctionnant au rythme bit (Tb) et fournissant chacun une des composantes (Pt, Qt) d'un symbole à transmettre ;
   - des moyens (20) de modulation et de transmission dudit symbole à transmettre fournissant un symbole transmis (ST),

   ledit récepteur (4) comprenant :

   - des moyens (21) de réception et de démodulation dudit symbole transmis (SR) fournissant deux composantes (Pr, Qr) de symbole reçu (SR) ;
   - deux démultiplexeurs (22, 23) recevant chacun une desdites composantes (Pr, Qr) dudit symbole reçu (SR) et fournissant chacun un mot de code (Ro, R1; R'o, R'1) reçu au rythme bit (Tb) ;
   - deux décodeurs de Viterbi (24, 25) fournissant chacun un mot décodé (26, 27) à partir desdits mots de code reçus (Ro, R1; R'o, R'1) ;
   - des moyens de décodage différentiel (28) recevant lesdits mots décodés (26, 27) et fournissant deux trains décodés (29, 30) ;
   - un multiplexeur (31) desdits trains décodés (29, 30) fournissant un train numérique reçu (TNR),

   caractérisé en ce que lesdites données numériques présentent une structure de trame comportant un mot de verrouillage, chaque mot de code issu d'un desdits codeurs convolutifs (16, 17) étant appliqué à un multiplexeur unique (18, 19) et chaque bit d'un mot de code reçu (Ro, R1; R'o, R'1) étant appliqué à un décodeur de Viterbi (24, 25) unique, lesdits moyens de codage différentiel (13) et lesdits moyens de décodage différentiel (28) étant de type MDP-4.

2. Système selon la revendication 1, caractérisé en ce que lesdits codeurs convolutifs (16, 17) fournissent des mots de code (Co, C1 ; C'o, C'1) non transparents aux sauts de phase de $\pi/2$.

3. Système selon l'une des revendications 1 et 2, caractérisé en ce que lesdits codeurs convolutifs (16, 17) ont comme polynôme générateur G = (171, 133).

4. Système selon l'une des revendications 1 à 3, caractérisé en ce que lesdites données numériques sont transmises en mode AMRT.

## Claims

1. System for coding/decoding digital data transmitted between a transmitter (3) and a receiver (4),
   said transmitter (3) including:

- a demultiplexer (10) receiving a digital bit stream (TNT) to be transmitted and supplying two demultiplexed bit streams (11, 12) at the bit timing rate (Tb);
- differential coding means (13) receiving said demultiplexed bit streams (11, 12) and supplying two coded bit streams (14, 15);
- two convolutional coders (16, 17) each receiving one of said coded bit streams (14, 15) and each supplying a code word ($C_0$, $C_1$; $C'_0$, $C'_1$) for each coded bit stream bit received;
- two multiplexers (18, 19) for multiplexing said code words ($C_0$, $C_1$; $C'_0$, $C'_1$) operating at said bit timing rate (Tb) and each supplying one component (Pt, Qt) of a symbol to be transmitted; and
- means (20) for modulating and transmitting said symbol to be transmitted supplying a transmitted symbol (ST),

said receiver (4) including:

- means (21) for receiving and demodulating said transmitted symbol (SR) supplying two components (Pr, Qr) of the received symbol (SR);
- two demultiplexers (22, 23) each receiving one of said components (Pr, Qr) of said received symbol (SR) and each supplying one received code word ($R_0$, $R_1$; $R'_0$, $R'_1$) at said bit timing rate (Tb);
- two Viterbi decoders (24, 25) each supplying a decoded word (26, 27) from said received code words ($R_0$, $R_1$; $R'_0$, $R'_1$);
- differential decoding means (28) receiving said decoded words (26, 27) and supplying two decoded bit streams (29, 30); and
- a multiplexer (31) for multiplexing said decoded bit streams (29, 30) supplying a received digital bit stream (TNR),

the system being characterized in that said digital data has a frame structure including a frame alignment word, each code word supplied by one of said convolutional coders (16, 17) being applied to a single multiplexer (18, 19) and each bit of a received code word ($R_0$, $R_1$; $R'_0$, $R'_1$) being applied to a single Viterbi decoder (24, 25), and said differential coding means (13) and said differential decoding means (28) being of the QPSK type.

2. System according to claim 1, characterized in that said convolutional coders (16, 17) supply code words ($C_0$, $C_1$; $C'_0$, $C'_1$) which are not transparent to phase skips of $\pi/2$.

3. System according to claim 1 or 2, characterized in that said convolutional coders (16, 17) use the generator polynomial G = (171, 133).

4. System according to any one of claims 1 to 3, characterized in that said digital data is transmitted in TDMA mode.


**Patentansprüche**

1. System zur Codierung/Decodierung von zwischen einem Sender (3) und einem Empfänger (4) übertragenen digitalen Daten, mit:

- einem Demultiplexer (10), der einen zu übertragenden digitalen Datenzug (TNT) empfängt und zwei gedemultiplexte Datenzüge (11, 12) im Bittakt (Tb) liefert;
- Mittel zur differentiellen Codierung (13), die die gedemultiplexten Datenzüge (11, 12) empfangen und zwei codierte Datenzüge (14, 15) liefern;
- zwei Faltungscodierer (16, 17), die jeweils einen der codierten Datenzüge (14, 15) empfangen und jeweils ein Codewort (Co, C1; C'o, C'1) für jedes empfangene Bit des codierten Datenzuges (14, 15) liefern;
- zwei Multiplexer (18, 19) für die Codewörter (Co, C1; C'o, C'1), die im Bittakt (Tb) arbeiten und jeweils eine der Komponenten (Pt, Qt) eines zu übertragenden Symbols liefern;
- Mittel (20) zum Modulieren und Übertragen des zu übertragenden Symbols, die ein übertragenes Symbol (ST) liefern;

wobei der Empfänger (4) umfasst:

- Mittel (21) zum Empfangen und Demodulieren des übertragenen Symbols (SR), die zwei Komponenten (Pr, Qr) des empfangenen Symbols (SR) liefern;
- zwei Demultiplexer (22, 23), die jeweils eine der Komponenten (Pr, Qr) des empfangenen Symbols (SR) empfangen und jeweils ein empfangenes Codewort (Ro, R1; R'o, R'1) im Bittakt (Tb) liefern;

- zwei Viterbi-Decodierer (24, 25), die jeweils ein decodiertes Wort (26, 27) anhand der empfangenen Codewörter (Ro, R1; R'o, R'1) liefern;
- Mittel zur differentiellen Decodierung (28), die die decodierten Wörter (26, 27) empfangen und zwei decodierte Datenzüge (29, 30) liefern;
- einen Multiplexer (31) für die decodierten Datenzüge (29, 30), der einen empfangenen digitalen Datenzug (TNR) liefert,

dadurch gekennzeichnet, dass die digitalen Daten eine Rahmenstruktur mit einem Verriegelungswort aufweisen, das jedes aus einem der Faltungscodierer (16, 17) hervorgegangene Codewort an einen einzigen Multiplexer (18, 19) angelegt wird und jedes Bit eines empfangenen Codewortes (Ro, R1; R'o, R'1) an einen einzigen Viterbi-Decodierer (24, 25) angelegt wird, wobei die Mittel zur differentiellen Codierung (13) und die Mittel zur differentiellen Decodierung (28) vom Typ PSK-4 sind.

2. System nach Anspruch 1, dadurch gekennzeichnet, dass die Faltungscodierer (16, 17) für Phasensprünge von $\pi/2$ nichttransparente Codewörter (Co, C1; C'o, C'1) liefern.

3. System nach einem der Ansprüche 1 und 2, dadurch gekennzeichnet, dass die Faltungscodierer (16, 17) als Generatorpolynom G=(131, 177) haben.

4. System nach einem der Ansprüche 1 bis 3, dadurch gekennzeichnet, dass die digitalen Daten im TDMA-Modus übertragen werden.

# FIG. 1A

# FIG. 1B

EP 0 668 682 B1

FIG. 2

# FIG. 3A

# FIG. 3B

EP 0 668 682 B1